(19) **Europäisches Patentamt / European Patent Office / Office européen des brevets**

(11) **EP 3 241 643 A1**

(12) **EUROPEAN PATENT APPLICATION**
published in accordance with Art. 153(4) EPC

(43) Date of publication:
**08.11.2017 Bulletin 2017/45**

(21) Application number: **16823143.9**

(22) Date of filing: **15.03.2016**

(51) Int Cl.:
**B23K 26/00** (2014.01)    **B23K 26/21** (2014.01)
**B23K 26/34** (2014.01)    **B29C 67/00** (2017.01)
**B33Y 30/00** (2015.01)    **B22F 3/105** (2006.01)
**B22F 3/16** (2006.01)

(86) International application number:
**PCT/JP2016/058202**

(87) International publication number:
**WO 2017/158737 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technology Research Association for Future Additive Manufacturing**
**Chuo-ku, Tokyo (JP)**

(72) Inventors:
• **OHNO, Hiroshi**
**Yokohama-shi, Kanagawa 2350017 (JP)**

• **SASAKI, Mitsuo**
**Yokohama-shi, Kanagawa 2350017 (JP)**
• **MASUKAWA, Kazuyuki**
**Yokohama-shi, Kanagawa 2350017 (JP)**
• **SASAKI, Yuji**
**Yokohama-shi, Kanagawa 2350017 (JP)**
• **TSUNO, Satoshi**
**Yokohama-shi, Kanagawa 2350017 (JP)**
• **OBARA, Takashi**
**Yokohama-shi, Kanagawa 2350017 (JP)**

(74) Representative: **TBK**
**Bavariaring 4-6**
**80336 München (DE)**

(54) **OPTICAL PROCESSING HEAD AND OPTICAL PROCESSING DEVICE**

(57)    An overall apparatus is downsized by reducing the size of a light beam branching structure. There is provided an optical processing head including an optical element group that guides a processing light beam from a light source to a process surface, and a light beam branching portion that branches reflected light of the processing light beam from the process surface and an observation light beam for observing a state of the process surface. The light beam branching portion is arranged on a light beam path of the processing light beam, and includes, between the optical element group and the process surface, a half mirror that guides the observation light beam to an observation optical system.

FIG. 1

**Description**

TECHNICAL FIELD

The present invention relates to an optical processing head and an optical processing apparatus.

BACKGROUND ART

In the above technical field, patent literature 1 discloses a technique of arranging a half mirror in a parallel optical path between focusing lenses, and branching an observation light beam and a processing light beam by the half mirror.

CITATION LIST

PATENT LITERATURE

Patent literature 1: U.S. Patent Application Publication No. 2013/0319980

SUMMARY OF THE INVENTION

TECHNICAL PROBLEM

In the technique described in the above literature, however, a light beam branching structure using a half mirror upsizes an apparatus, and it is thus impossible to downsize the overall apparatus by reducing the size of the light beam branching structure.
The present invention enables to provide a technique of solving the above-described problem.

SOLUTION TO PROBLEM

One aspect of the present invention provides an optical processing head comprising:

an optical element group that guides a processing light beam from a light source to a process surface; and
a light beam branching portion that branches reflected light of the processing light beam from the process surface and an observation light beam for observing a state of the process surface,
wherein the light beam branching portion is arranged on a light beam path of the processing light beam, and includes, between the optical element group and the process surface, a half mirror that guides the observation light beam to an observer.

Another aspect of the present invention provides an optical processing apparatus using the aforementioned optical processing head.

ADVANTAGEOUS EFFECTS OF INVENTION

According to the present invention, it is possible to downsize an overall apparatus by reducing the size of a light beam branching structure.

BRIEF DESCRIPTION OF DRAWINGS

Fig. 1 is a view schematically showing the overall arrangement of an optical processing apparatus according to the first embodiment of the present invention;
Fig. 2 is a schematic sectional view showing the arrangement of the optical processing head of the optical processing apparatus according to the first embodiment of the present invention;
Fig. 3A is a partially enlarged schematic sectional view showing the arrangement of the light beam branching portion of the optical processing apparatus according to the first embodiment of the present invention;
Fig. 3B is a sectional view schematically showing a light beam path including the light beam branching portion of the optical processing apparatus according to the first embodiment of the present invention;

Fig. 4 is a schematic sectional view for explaining the light beam path of an observation light beam by the optical processing apparatus according to the first embodiment of the present invention;

Fig. 5A is a partially enlarged sectional view for explaining the arrangement of a lens included in the light beam branching portion of the optical processing apparatus according to the first embodiment of the present invention;

Fig. 5B is a partially enlarged sectional view for explaining the light beam path of the observation light beam by the optical processing apparatus according to the first embodiment of the present invention;

Fig. 6 is a sectional view schematically showing a light beam path including the light beam branching portion of an optical processing apparatus according to the third embodiment of the present invention; and

Fig. 7 is a schematic sectional view showing the arrangement of the light beam branching portion of an optical processing apparatus according to the fourth embodiment of the present invention.

DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

[First Embodiment]

<Technical Premise>

With respect to optical monitoring of a processing status by an optical processing apparatus, there has been proposed a method of observing a process surface or the like in a direction coincident with an irradiation optical axis to the processing point of a processing light beam such as a laser beam. In this method, observation light returned from the processing point or the like is guided to an image sensor, thereby acquiring an image of the process surface or the like (see patent literature 1). In the method described in patent literature 1, a lot of melt or the like is scattered from the processing point but the optical axis in the irradiation direction to the processing point of the laser beam (processing light) is coincident with the optical axis of the observation light from the processing point, and thus it is possible to obtain a correct observation image.

A processing apparatus using the method described in patent literature 1 includes a light source for optical processing, for example, a processing light beam source such as a carbon dioxide laser, a visible light source for generating visible light for optically detecting the processing status of optical processing, and an observation camera for detecting a visible light image of a processing point being processed. As described above, in patent literature 1, it is possible to observe an observation image facing the processing point from the irradiation direction of the laser beam by making the optical axis in the irradiation direction to the processing point of the laser beam coincident with the optical axis of the observation light from the processing point, thereby obtaining a correct observation image.

According to patent literature 1, the distance from the laser beam source to the processing point can be changed in accordance with processing conditions and the like. However, in a processing apparatus according to the technical premise represented by patent literature 1, a parallel light beam path formed from a collimator lens optical system is provided between the laser beam source and the processing point so that a laser beam sectional area (beam diameter) remains unchanged even if the distance from the laser beam source to the processing point is changed. That is, an optical processing apparatus using a laser beam or the like generally converts a light beam from a light source into parallel light, and condenses the parallel light to a processing point by a condenser lens. In other words, the optical processing apparatus requires an optical lens for condensing parallel light.

On the other hand, the observation light from the processing point propagates toward the laser beam source along the optical axis in the incident direction of the laser beam. Since, however, the image sensor such as a camera cannot be arranged at the position of the laser beam source, it is necessary to bend only the observation light by a predetermined angle from the laser beam path to branch from the laser beam path, and guide it to the observation camera. In the patent literature 1, a half mirror that passes (or reflects) the laser beam and reflects (or passes) the observation light is inclined by 45° with respect to the laser beam path, and arranged in the parallel optical path. By arranging such half mirror, the half mirror according to patent literature 1 guides only the observation light to the image sensor.

<Technique of Embodiment>

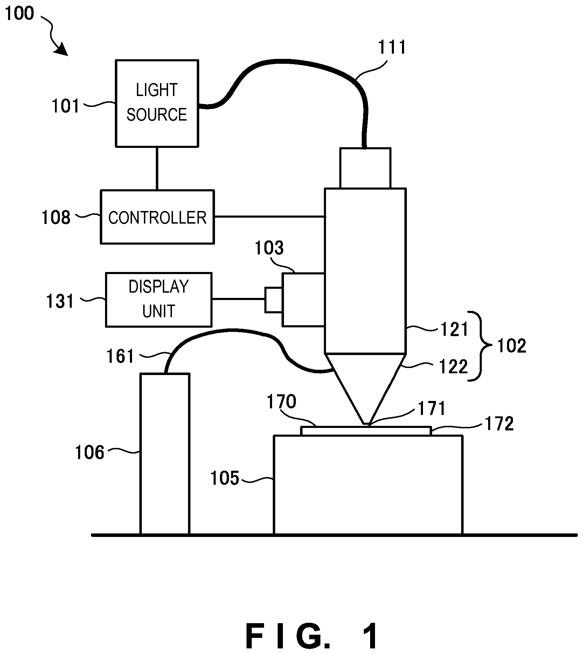

An optical processing apparatus according to the first embodiment of the present invention will be described with reference to Figs. 1 to 5B. Fig. 1 is a view for schematically explaining the overall arrangement of an optical processing apparatus 100 according to this embodiment.

<<Apparatus Arrangement>>

As shown in Fig. 1, the optical processing apparatus 100 includes a light source 101, an optical processing head 102, an observation optical system 103, a stage 105, and a material storage unit 106.

The light source 101 generates a light beam for shaping of a shaped object 172. Although a laser source can be used as the light source 101, the present invention is not limited to this. For example, an LED (Light Emitting Diode), a halogen lamp, or a xenon lamp can be used. Note that a light beam used to melt a powder material as the material of the shaped object 172 is not limited to a laser beam, and any light beam capable of melting the powder material at a processing point may be used. For example, the light beam may be a microwave or an electromagnetic wave in the ultraviolet range.

A light transmitter 111 transmits the light beam generated by the light source 101. The light transmitter 111 is, for example, an optical fiber having a core diameter of $\phi$0.01 to 1 mm, and guides the light beam (laser beam) generated by the light source 101 to the optical processing head 102. The optical processing head 102 includes a condensing optical system 121 and a nozzle 122.

The condensing optical system 121 includes a condenser for condensing (focusing) light as a light beam. The optical processing head 102 is formed by attaching the nozzle 122 on the downstream side of the condenser of the condensing optical system 121. The laser beam supplied to the optical processing head 102 is adjusted to condense on a process surface 170 through an optical system including a lens provided in the condensing optical system 121, and the process surface 170 is irradiated with the laser beam through the inside of the nozzle 122. The condensing position of the laser beam can be changed by changing the lens interval of the condensing optical system 121 or the like.

The material storage unit 106 supplies a carrier gas containing a powder material or the like to the nozzle 122 of the optical processing head 102 via a material supplier 161. The powder material is, for example, a particle such as a metal particle or a resin particle. The carrier gas is an inert gas and can be, for example, argon gas, nitrogen gas, or helium gas.

The material supplier 161 is, for example, a resin or metal hose, and guides, to the nozzle 122 of the optical processing head 102, a powder flow prepared by mixing a powder material in a carrier gas. Note that the carrier gas is unnecessary if the powder material is a wire.

A controller 108 receives a shaping condition such as fine writing or bold writing, changes the output value of the laser beam from the light source 101 in accordance with the received shaping condition, and slides the outer housing of the nozzle 122. With this processing, the controller 108 controls the powder spot diameter of the powder material to be ejected from the nozzle 122 in accordance with the diameter of a molten pool 171.

The observation optical system 103 is attached to the optical processing head 102. By displaying, on a display unit 131 such as a display, the observation light beam guided to the observation optical system 103, the user can observe the state of the process surface 170 or the like.

The observation light beam including radiant light from the process surface 170 reaches the condensing optical system 121 through the inside of the nozzle 122. Upon reaching the condensing optical system 121, the observation light beam is guided to the observation optical system 103 by an optical system provided in the condensing optical system 121. A video of the process surface 170 is displayed on the display unit 131. Note that the observation light beam includes ambient light. Although the ambient light includes illumination light in a place where the optical processing apparatus 100 is installed, the present invention is not limited to this. A light source for an observation light beam may be additionally provided outside the optical processing head 102, and an observation light beam generated from the light source may be used as ambient light. To the contrary, for example, the reflected light of a processing light beam generated from the light source 101 may be used as an observation light beam.

<<Apparatus Operation>>

The operation of the optical processing apparatus 100 will be described next. The shaped object 172 is shaped on the stage 105. Light (a processing light beam) exiting from the optical processing head 102 is condensed to the process surface 170 on the shaped object 172. The temperature of the process surface 170 is raised by the condensed light, and the process surface 170 is melted, thereby forming the molten pool 171 on part of the process surface 170.

The powder material is ejected from the nozzle 122 to the molten pool 171 on the process surface 170. The ejected powder material is melted into the molten pool 171. After that, the molten pool 171 is cooled and hardened to deposit the powder material on the process surface 170, thereby implementing three-dimensional shaping.

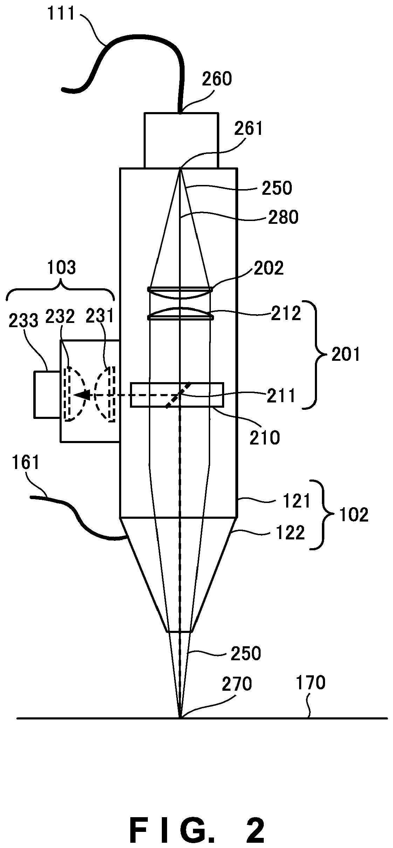

The optical processing head 102 of the optical processing apparatus 100 according to this embodiment will be described with reference to Fig. 2. Fig. 2 is a schematic sectional view showing the arrangement of the optical processing head 102 of the optical processing apparatus 100. As shown in Fig. 2, the optical processing head 102 includes the condensing optical system 121 and the nozzle 122. The observation optical system 103 is attached to the optical processing head 102. The observation optical system 103 includes lenses 231 and 232 and an image sensor 233.

A processing light beam 250 guided from an incident end 260 to the optical processing head 102 through the light transmitter 111 from the light source 101 (not shown) passes through the inside of the optical processing head 102 and exits to the process surface 170. The condensing optical system 121 includes a half mirror 211 and lenses 202 and 212.

The lenses 202 and 212 form an optical element group. The number of lenses forming an optical element group is not limited to this. The half mirror 211 and the lens 212 form a light beam branching portion 201. The processing light beam 250 reaches the process surface 170 via the lens 202 and the light beam branching portion 201. Note that this embodiment will explain an example in which a lens is used as an optical element. However, an optical element is not limited to this. Any element capable of refracting, reflecting, and transmitting a light beam may be used.

The lens 202 has a shape rotationally symmetrical with respect to an optical axis 280 (central axis) of the processing light beam 250. The lens 202 is a collimator lens, and changes, into parallel light, the processing light beam 250 guided from the light source 101 and entering the condensing optical system 121. This can convert, into parallel light, the processing light beam 250 diverging and spreading from an exit end 261, as needed, thereby avoiding upsizing of the optical processing apparatus 100. Furthermore, it is possible to adjust the position of a processing point 270 by moving the lens 202 along the optical axis 280 (light beam path).

The processing light beam 250 converted into parallel light passes through the lens 212 and the like, and then the process surface 170 is irradiated with the parallel light from an opening portion at the distal end of the nozzle 122. The nozzle 122 is supplied with a processing material and a gas from the material storage unit 106 and a gas storage unit (not shown) via the material supplier 161 and a gas supplier (not shown), and ejects the material mixed with the gas to the process surface 170. Note that the material supplier 161 such as a hose and the gas supplier may be integrated.

The observation light beam such as radiant light from the process surface 170 travels through the light beam path of the processing light beam 250 in the opposite direction, and is reflected by the lens 212. The observation light beam reflected by the lens 212 is also reflected by the half mirror 211, and guided to the observation optical system 103. The observation optical system 103 is a mechanism for observing the processing status by the condensing optical system 121 from a viewpoint along the optical axis 280, and includes the image sensor 233 such as a CCD (Charge Coupled Device) or CMOS (Complementary Metal Oxide Semiconductor). The half mirror 211 provided in the condensing optical system 121 guides the light beam from the process surface 170 to the image sensor 233. It is also possible to improve the processing accuracy by performing feedback control of processing parameters in accordance with the observed processing status.

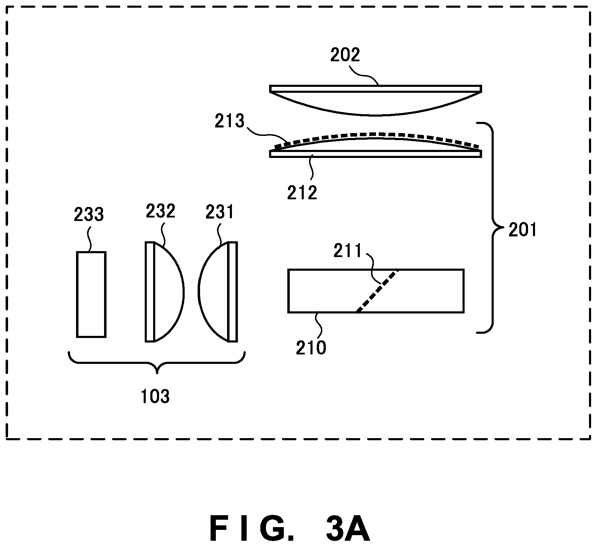

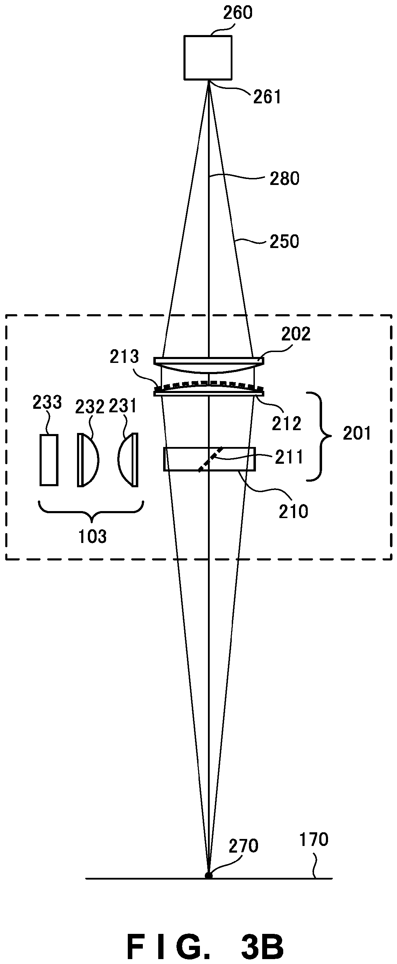

The arrangement of the light beam branching portion of the optical processing apparatus according to this embodiment will be described with reference to Figs. 3A and 3B. Fig. 3A is a partially enlarged schematic sectional view showing the arrangement of the light beam branching portion of the optical processing apparatus according to this embodiment (an enlarged view showing a portion surrounded by dotted lines in Fig. 3B). Fig. 3B is a schematic sectional view showing the arrangement of the light beam branching portion of the optical processing apparatus according to this embodiment. The condensing optical system 121 in the optical processing head 102 of the optical processing apparatus according to this embodiment is formed by sequentially arranging the lenses 202 and 212 and the half mirror 211 from the upstream side (the upper side in Figs. 3A and 3B). Similarly, the observation optical system 103 is formed by sequentially arranging the lenses 231 and 232 and the image sensor 233 from the right side in Figs. 3A and 3B.

The processing light beam 250 generated from the light source 101 passes through the light transmitter 111, and then exits from the exit end 261. The processing light beam 250 is converted into parallel light by the lens 202, and condensed to the processing point 270 by the lens 212. The lenses 202 and 212 are made of a material that transmits the processing light beam 250. The lenses 202 and 212 may have undergone surface treatment for increasing the transmittance of the processing light beam 250.

The light beam branching portion 201 is formed by the half mirror 211 and the lens 212 among the above-described elements forming the condensing optical system 121. A mirror surface 213 is formed on the convex side of the lens 212.

Note that the half mirror 211 is protected by a protection cover 210. The protection cover 210 protects the half mirror 211 from a contaminant such as fume or spatter scattered from the process surface 170 or the processing point 270 on the process surface 170. The protection cover 210 may be made of glass. The present invention, however, is not limited to this. For example, the protection cover 210 may be made of polycarbonate or acrylic as a transparent resin, or may be made of any material that is transparent to the processing light beam 250. If the protection cover 210 is contaminated, only the protection cover 210 needs to be replaced.

The half mirror 211 may be integrated with the protection cover 210. That is, for example, the protection cover 210 made of glass or the like may be obliquely cut near the center, and the cut surface may be coated to reflect the observation light beam. The cut surface may be coated by depositing a dielectric multilayered film or the like on the cut surface. The present invention, however, is not limited to this. For example, a film or the like may be adhered.

The mirror surface 213 is created on one of the two facing surfaces of the lens 212. The lens 212 is made of, for example, glass such as silica glass, and the mirror surface 213 is created by depositing a dielectric multilayered film on one of the surfaces of the lens 212. In this embodiment, the mirror surface 213 is created on the convex side of the lens 212. A method of creating the mirror surface 213 is not limited to the method using deposition. The mirror surface 213 may be created by creating, as another part, a mirror conforming to the convex shape of the lens 212, and adhering the created mirror to the lens 212.

The observation optical system 103 is formed from the lenses 231 and 232 and the image sensor 233. The lens 231 is arranged to face the half mirror 211. The lens 231 converts the observation light beam reflected by the half mirror 211 into parallel light. The lens 232 is arranged at a position facing the lens 231, and guides, to the image sensor 233, the observation light beam converted into the parallel light by the lens 231.

Note that the arrangement of the observation optical system 103 is not limited to this. The observation optical system 103 may have an arrangement in which only the image sensor 233 is arranged without using the lenses 231 and 232. In this case, the arrangement of the observation optical system 103 can be made simple and compact. To the contrary, if the lenses 231 and 232 are used, an imaging magnification can be adjusted in accordance with the size of the image sensor 233.

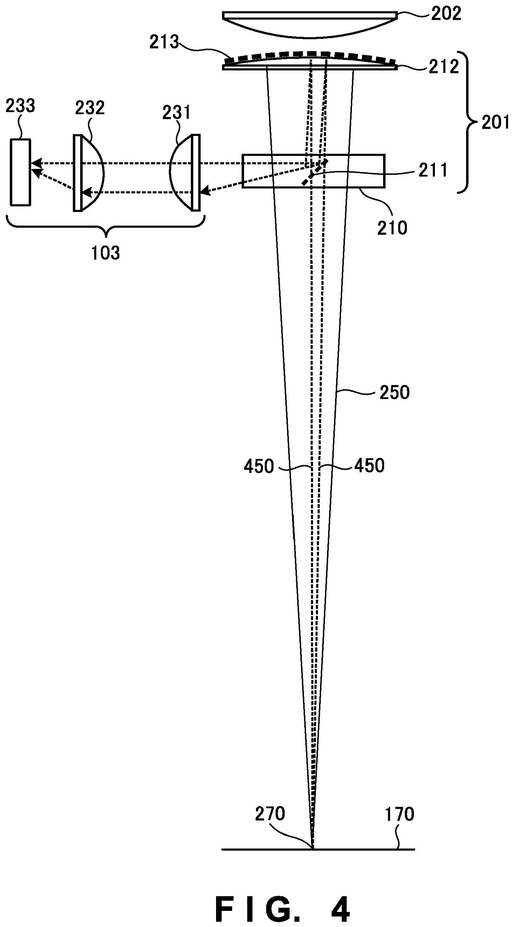

Fig. 4 is a schematic sectional view for explaining the light beam path of an observation light beam 450 by the optical processing apparatus 100 according to this embodiment. Note that Fig. 4 exaggerates the interval between the lenses and the like. The observation light beam 450 that has traveled through the light beam path of the processing light beam 250 from the processing point 270 on the process surface 170 in the opposite direction changes its path in the light beam branching portion 201, and is guided to the observation optical system 103. That is, the observation light beam 450 reflected by the mirror surface 213 of the light beam branching portion 201 is reflected by the half mirror 211 to change the path, and guided to the observation optical system 103.

As shown in Fig. 4, in the observation optical system 103, the observation light beam 450 is guided to the image sensor 233 via the lenses 231 and 232, thereby forming an image. This can capture the state of the process surface 170 or the processing point 270 in the image sensor 233. By capturing the processing point 270 or the like, it is possible to grasp the molten state of the material of the shaped object 172, such as a metal powder, at the processing point 270 or the like. Since the molten state of the material influences the processing accuracy of the shaped object 172, it is possible to improve the processing accuracy of the shaped object 172 by controlling the output of the processing light beam 250 in accordance with the molten state.

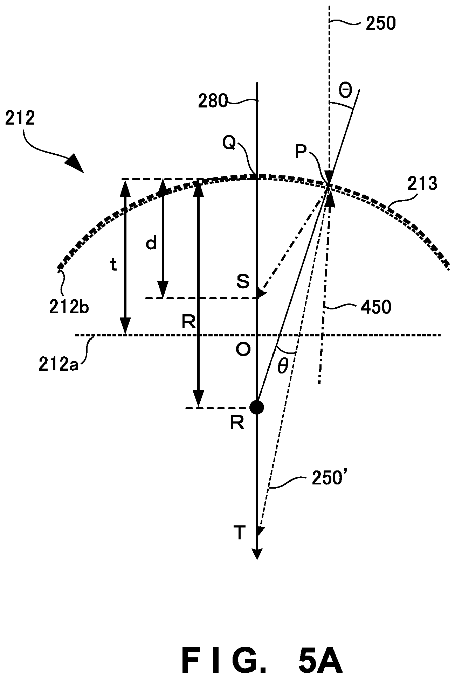

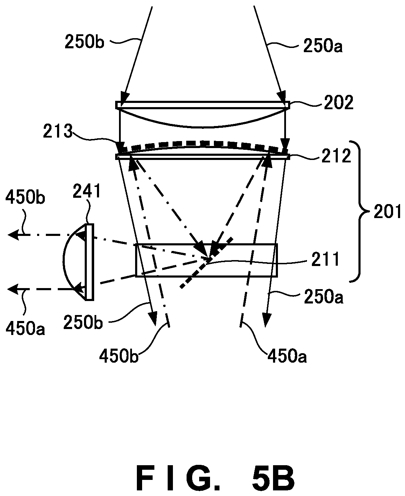

The shapes of the two lens surfaces of the lens 212 and the influence by the shapes will be described with reference to Figs. 5A and 5B. Fig. 5A is a partially enlarged sectional view for explaining the arrangement of the lens included in the light beam branching portion of the optical processing apparatus according to this embodiment, and is a sectional view obtained by cutting the lens by a plane including the optical axis 280 (central axis) of the lens 212. Fig. 5B is a partially enlarged sectional view for explaining the light beam path of the observation light beam by the optical processing apparatus according to this embodiment.

The lens 212 includes two facing lens surfaces. That is, the lens 212 is formed by a lens surface (downstream lens surface 212a) on the side closer to the processing point 270, and a lens surface (upstream lens surface 212b) on the side closer to the light source 101. The upstream lens surface 212b has, for example, a convex shape. The upstream lens surface 212b has a convex shape in a direction to separate from the processing point 270 (a direction to come close to the light source 101). The shape of the downstream lens surface 212a is, for example, a planar shape. Thus, the lens 212 is a plane-convex lens formed by combining a convex shape and planar shape.

A "thickness t" of the lens 212 is defined by the clearance along the optical axis 280 between the downstream lens surface 212a and the upstream lens surface 212b. That is, the thickness t indicates the distance between points O and Q in Fig 5A.

The "curvatures" of the downstream lens surface 212a and upstream lens surface 212b are respectively defined as curvatures at points where the downstream lens surface 212a and upstream lens surface 212b intersect the optical axis 280. Since the downstream lens surface 212a is planar, the curvature is 0. If the upstream lens surface 212b is a spherical lens, the curvature of the upstream lens surface 212b is constant. On the other hand, if the upstream lens surface 212b is an aspherical lens, the curvature at each point on the upstream lens surface 212b changes. Thus, the curvature at a point near the optical axis 280 can be approximated as the curvature of the upstream lens surface 212b at the intersection point of the optical axis 280 and the upstream lens surface 212b.

A point R represents the center of the curvature of the upstream lens surface 212b, and is a point away from the intersection point Q of the upstream lens surface 212b and the optical axis 280 by a curvature radius along the optical axis 280. The distance from the point Q to a center R of the curvature is represented by "R". When n represents the refractive index of the lens 212 and R represents the curvature at the intersection point of the central axis of the lens 212 and the upstream lens surface 212b, the thickness t (the distance between the points Q and O) of the lens 212 satisfies:

$$t \leq R \, \frac{n}{n+1} \qquad \qquad ...(1)$$

The processing light beam 250 is refracted by the upstream lens surface 212b of the lens 212. The mirror surface 213 for reflecting and condensing the observation light beam 450 is provided on the upstream lens surface 212b, and the processing light beam 250 passes through the mirror surface 213.

A point P represents a point at which the processing light beam 250 enters the upstream lens surface 212b of the lens 212. An angle formed by an inward normal vector (a normal vector facing in the inward direction of the lens 212) at the point P and the processing light beam 250 entering the point P is represented by a "light beam angle Θ". An angle formed by the inward normal vector at the point P and a processing light beam 250' immediately after exiting from the point P is represented by a "light beam angle θ".

The observation light beam 450 is a light beam obtained when the ambient light (ambient illumination light) is reflected by the processing point 270, or a light beam of a thermal radiation wave generated at the processing point 270. The processing point 270 is a point at which the processing light beam 250 is condensed. Thus, the observation light beam 450 travels almost along the light beam path of the processing light beam 250 in the opposite direction, and reaches the mirror surface 213 provided on the upstream lens surface 212b of the lens 212. The mirror surface 213 is created to reflect the observation light beam 450 (one-dot dashed line) in Fig. 5A or an observation light beam 450a (broken line) and an observation light beam 450b (one-dot dashed line) in Fig. 5B. That is, the mirror surface 213 selectively reflects the processing light beam 250 and the observation light beam 450.

Since the upstream lens surface 212b has a convex shape toward the light source 101, the mirror surface 213 serves as a concave mirror for the observation light beam 450 entering from the processing point 270. On the other hand, since the processing point 270 is a position at which the processing light beam 250 (parallel light beam) is condensed and almost focused by the lens 212, the observation light beam 450 that travels from the processing point 270 to the light source 101 in the opposite direction enters the mirror surface 213 serving as a concave mirror. Upon entering the mirror surface 213 (concave mirror), the observation light beam 450 is reflected by the mirror surface 213, and condensed at the focus position of the mirror surface 213. Note that Fig. 5B shows an example in which the half mirror 211 is arranged at the focus position of the mirror surface 213.

The observation light beam 450 is reflected by the mirror surface 213, and condensed at a point S on the optical axis 280. The distance between the points Q and S is represented by d (reflecting/condensing distance). If the distance d (between the points Q and S) is smaller than the thickness t (between the points Q and O) of the lens 212, the observation light beam 450 is condensed in the lens 212. Since the point S is a condensing point satisfying d (between the points Q and S) < t (between the points Q and O), the observation light beam 450 is condensed in the lens 212.

To the contrary, if the distance d (between the points Q and S) is larger than the thickness t (between the points Q and O) of the lens 212, the observation light beam 450 is condensed at a position outside the lens 212, that is, a position closer to the processing point 270 than to the flat downstream lens surface 212a. If the observation light beam 450 is condensed in the lens 212, heat dissipation becomes difficult, and thus heat may be accumulated in the lens 212, thereby damaging the lens 212 at the condensing point in the lens 212. That is, thermal expansion or a phase change caused by a rise in temperature degrades the lens performance. To avoid the influence of the heat, the observation light beam 450 is condensed outside the lens 212, thereby making it possible to reduce degradation of the performance of the lens 212.

Using geometry and the Snell's law, the distance d of the reflecting/condensing point (point S) by the mirror surface 213 from the point Q, the curvature radius R of the lens 212, and the refractive index n of the lens 212 have a relationship given by:

$$d = R\frac{n}{n+1} \qquad \qquad ...(2)$$

As described above, to reduce degradation of the lens performance, the thickness t of the lens 212 needs to satisfy:

$$t \leq d \qquad \qquad ...(3)$$

Equation (2) and inequality (3) yield:

$$t \leq R\frac{n}{n+1} \qquad \qquad ...(4)$$

By satisfying this condition, it is possible to reduce degradation of the lens performance.

After being reflected by the mirror surface 213, the observation light beam 450 is reflected by the half mirror 211 and guided to the observation optical system 103. At this time, the observation light beam 450 travels in a direction in which light is condensed by the mirror surface 213. That is, the observation light beam 450 is focused toward the half mirror 211. Therefore, the half mirror 211 can be made compact in size. This can downsize the optical processing head 102, thus reducing the size of the overall optical processing apparatus 100.

The observation light beam 450 can be condensed, as described above, because the mirror surface 213 has a convex shape in the direction to separate from the processing point 270 (toward the upstream side). That is, by making the mirror surface 213 have a convex shape, the half mirror 211 can be made compact.

If the half mirror 211 is arranged at the condensing point of the observation light beam 450, the half mirror 211 can be made most compact. If, however, the half mirror 211 is arranged at the condensing point of the observation light beam 450, a rise in temperature may damage the half mirror 211. To cope with this, if damage to the half mirror 211 is concerned, the half mirror 211 is preferably arranged between the condensing point and the downstream mirror surface 212a by avoiding the vicinity of the condensing point. The condensing point indicates a point at which light is condensed by the mirror surface 213. That is, the condensing point indicates that when an optical element such as the half mirror 211 that changes the light beam path is not arranged.

As described above, the half mirror 211 can be made most compact when the half mirror 211 is arranged near the point S (condensing point). To achieve this, at least the point S needs to exist between the processing point 270 and the mirror surface 213. That is, when L represents the distance between the processing point 270 and the point Q, the distance d (reflecting/condensing distance) needs to satisfy:

$$d \leq L \qquad\qquad\qquad ...(5)$$

That is, by setting the point S between the processing point 270 and the mirror surface 213, the half mirror 211 can be made most compact. Using equation (2), inequality (5) is rewritten by:

$$\frac{L}{R} \geq \frac{n}{n+1} \qquad\qquad ...(6)$$

That is, by setting a value, obtained by dividing the distance L from the processing point 270 to the mirror surface 213 by the curvature radius R of the lens 212, larger than the value of the right-hand side of inequality (6), the half mirror 211 can be made most compact.

If the distance d (the distance between the points Q and S) is smaller than the thickness t of the lens 212, that is, the point S is inside the lens 212, the observation light beam 450 exits from the lens 212 in a divergence direction. Therefore, to guide the diverged observation light beam 450 to the observation optical system 103, the half mirror 211 needs to be upsized. That is, if the distance d (the distance between the points Q and S) is larger than the thickness t of the lens 212, that is, the point S is outside the lens 212, the half mirror 211 can be downsized.

According to this embodiment, the arrangement in which the light beam branching portion is provided is adopted. Thus, the collimator portion for converting a processing light beam into parallel light can be downsized, and the overall optical processing apparatus can be made compact.

[Second Embodiment]

An optical processing apparatus according to the second embodiment of the present invention will be described next. In this embodiment, an image sensor 233 of an observation optical system 103 may be a photodiode (PD) capable of sensing an infrared ray or far-infrared ray. In this case, an observation light beam 450 is not visible light but an infrared ray or far-infrared ray.

According to this embodiment, it is possible to sense the light beam intensity from a processing point 270. The light beam intensity can be calculated from a Planck distribution based on the temperature of the processing point 270. This can monitor the temperature of the processing point 270. It is possible to grasp the degree of melting of the material at the processing point 270 based on the temperature of the processing point 270, and the light beam intensity of a processing light beam 250 is changed based on the degree of melting. Thus, the temperature of the processing point 270 influences the processing accuracy. Therefore, if the temperature of the processing point 270 can be monitored, it is possible to perform output control of the processing light beam 250 such as a laser beam, and the like based on a monitoring result.

[Third Embodiment]

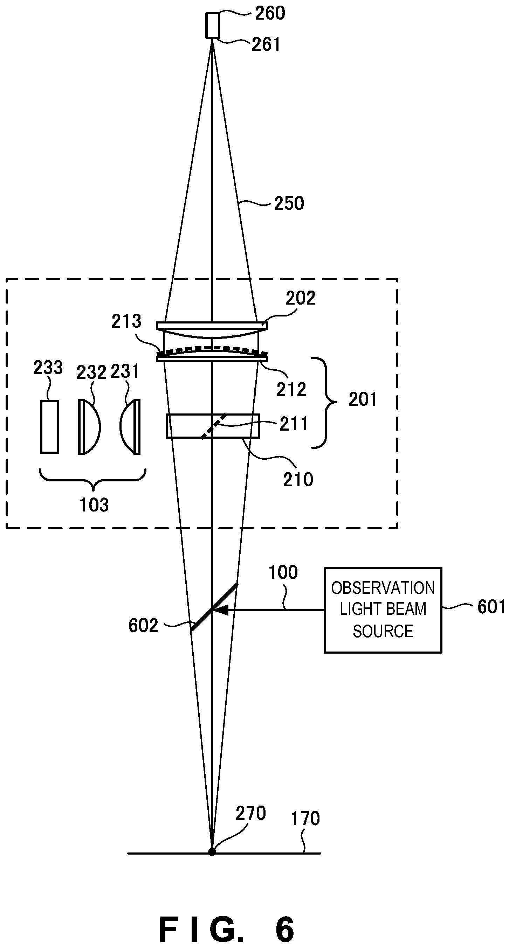

An optical processing apparatus according to the third embodiment of the present invention will be described with reference to Fig. 6. Fig. 6 is a sectional view for schematically explaining a light beam path including the light beam branching portion of the optical processing apparatus according to this embodiment. The optical processing apparatus according to this embodiment is different from that according to the first embodiment in that an observation light beam source is included. The remaining components and operations are the same as those in the first embodiment. Hence, the same reference numerals denote the same components and operations, and a detailed description thereof will be omitted.

The optical processing apparatus according to this embodiment includes an observation light beam source 601 and a half mirror 602. The optical processing apparatus 100 according to the first embodiment uses, as the observation light beam 450, ambient light such as indoor light in a place where the optical processing apparatus is installed. However, in the optical processing apparatus according to this embodiment, the observation light beam source 601 serving as a light source for an observation light beam is additionally provided. The half mirror 602 guides, to a processing point 270, an observation light beam generated by the observation light beam source 601. After being guided to the processing point 270 and reflected by it, the observation light beam is guided to an observation optical system 103 in a light beam branching portion 201.

According to this embodiment, since the light source for generating an observation light beam is additionally provided, it is possible to adjust the luminance, intensity, output, and the like of the observation light beam, as needed, and accurately grasp the state of a processing point, a process surface, or the like.

[Fourth Embodiment]

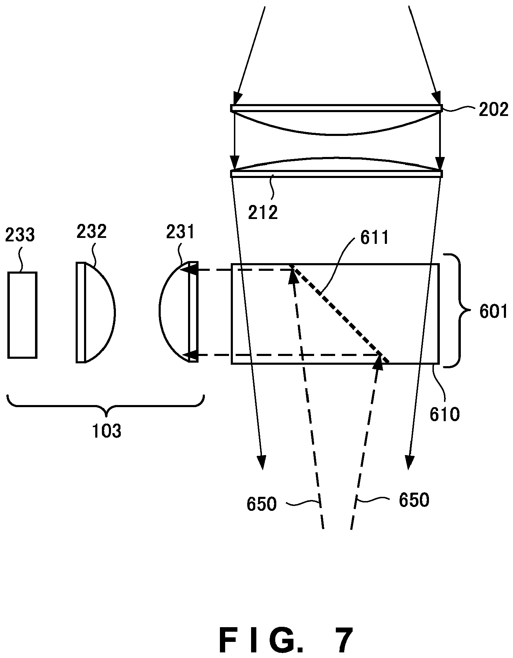

An optical processing apparatus according to the fourth embodiment of the present invention will be described with reference to Fig. 7. Fig. 7 is a view for explaining the light beam branching portion of the optical processing apparatus according to this embodiment. The light beam branching portion of the optical processing apparatus according to this embodiment is different from that according to the first embodiment in that the light beam branching portion is formed by a half mirror. The remaining components and operations are the same as those in the first embodiment. Hence, the same reference numerals denote the same components and operations, and a detailed description thereof will be omitted.

The optical processing apparatus according to this embodiment includes a light beam branching portion 601. The light beam branching portion 601 includes a half mirror 611 as a component, and a protection cover 610 is attached to the half mirror 611. Furthermore, lenses 202 and 212 form an optical element group. Note that the number of lenses forming an optical element group is not limited to this.

In the first embodiment, the observation light beam is reflected by the mirror surface 213 formed in the lens 212, and guided to the observation optical system 103 by the half mirror 211. To the contrary, in the optical processing apparatus according to this embodiment, an observation light beam 650 from a processing point 270 or process surface 170 (not shown) is directly guided to an observation optical system 103 by the half mirror 611 of the light beam branching portion 601.

According to this embodiment, since the observation light beam is directly guided to the observation optical system by the half mirror, the arrangement of the light beam branching portion can be made simple.

[Other Embodiments]

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

The present invention is applicable to a system including a plurality of devices or a single apparatus. The present invention is also applicable even when an information processing program for implementing the functions of the embodiments is supplied to the system or apparatus directly or from a remote site. Hence, the present invention also incorporates the program installed in a computer to implement the functions of the present invention by the computer, a medium storing the program, and a WWW (World Wide Web) server that causes a user to download the program. Especially, the present invention incorporates at least a non-transitory computer readable medium storing a program that causes a computer to execute processing steps included in the above-described embodiments.

**Claims**

1. An optical processing head comprising:

an optical element group that guides a processing light beam from a light source to a process surface; and
a light beam branching portion that branches reflected light of the processing light beam from the process surface and an observation light beam for observing a state of the process surface,
wherein said light beam branching portion is arranged on a light beam path of the processing light beam, and includes, between said optical element group and the process surface, a half mirror that guides the observation light beam to an observer.

2. The optical processing head according to claim 1, wherein said light beam branching portion comprises
an optical element, of said optical element group, that is provided on a downstream side closer to the process surface, transmits the processing light beam, and reflects the observation light beam, and
said half mirror that guides, to the observer, the observation light beam reflected by the optical element.

3. The optical processing head according to claim 2, wherein
said optical element group includes at least two optical elements, and
the optical element, of said optical element group, that is arranged on the downstream side closer to the process surface includes a convex surface that selectively reflects the observation light beam and has a convex shape toward an upstream side.

4. The optical processing apparatus according to claim 3, wherein the convex surface selectively reflects radiant light from the process surface.

5. The optical processing head according to any one of claims 2 to 4, wherein the optical element comprises a plane-convex lens, and is arranged so that a flat surface is positioned on the downstream side and the convex surface is positioned on the upstream side.

6. The optical processing head according to any one of claims 2 to 5, wherein a reflecting/condensing point as a point at which the observation light beam traveling from the process surface to the optical element is reflected and condensed by the optical element is positioned between the processing point and the optical element.

7. The optical processing head according to any one of claims 2 to 6, wherein
the optical element is rotationally symmetrical with respect to an optical axis of the processing light beam, and
when n represents a refractive index of the optical element, and R represents a curvature radius of the optical element at an intersection point of the optical axis and the convex surface, a distance L from the processing point to the convex surface of the optical element satisfies:

$$\frac{L}{R} \geq \frac{n}{n+1} \qquad\qquad ...(6)$$

8. The optical processing head according to any one of claims 2 to 7, wherein said half mirror is arranged between the reflecting/condensing point and the optical element.

9. The optical processing head according to any one of claims 1 to 8, further comprising:

a cover glass that is arranged on the light beam path,
wherein said half mirror is arranged in said cover glass.

10. The optical processing head according to any one of claims 1 to 9, wherein the observer is arranged to face said half mirror.

11. The optical processing head according to any one of claims 1 to 10, wherein a thickness t of the optical element satisfies:

$$t \leq R\,\frac{n}{n+1} \qquad\qquad ...(4)$$

12. The optical processing head according to any one of claims 1 to 10, wherein the optical element, on the upstream side closer to the light source, of said optical element group converts the processing light beam into parallel light.

13. An optical processing apparatus using an optical processing head defined in any one of claims 1 to 12.

14. The optical processing apparatus according to claim 13, further comprising:

a nozzle that focuses a powder to the processing point.

**F I G. 1**

**F I G. 2**

**F I G. 3A**

F I G. 3B

F I G. 4

**F I G.  5A**

# FIG. 5B

F I G.  6

# F I G. 7

## INTERNATIONAL SEARCH REPORT

International application No.

PCT/JP2016/058202

A. CLASSIFICATION OF SUBJECT MATTER
*B23K26/00*(2014.01)i, *B23K26/21*(2014.01)i, *B23K26/34*(2014.01)i, *B29C67/00*
(2006.01)i, *B33Y30/00*(2015.01)i, *B22F3/105*(2006.01)n, *B22F3/16*(2006.01)n

According to International Patent Classification (IPC) or to both national classification and IPC

B. FIELDS SEARCHED

Minimum documentation searched (classification system followed by classification symbols)
B23K26/00-26/70, B29C67/00, B33Y30/00, B22F3/105, B22F3/16

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| Y<br>A | JP 2002-172480 A (Hoya Continuum Kabushiki Kaisha),<br>18 June 2002 (18.06.2002),<br>paragraphs [0001] to [0004], [0019] to [0020], [0024]; fig. 1 | 1,9-10,12-14<br>2-8,11 |
| Y<br>A | JP 2002-146547 A (Toyota Industries Corp., Toyota Central Research and Development Laboratories, Inc.),<br>22 May 2002 (22.05.2002),<br>paragraphs [0034] to [0035] | 1,9-10,12-14<br>2-8,11 |
| Y<br>A | JP 5-245675 A (Hoya Corp.),<br>24 September 1993 (24.09.1993),<br>paragraph [0018]; fig. 1 | 1,9-10,12-14<br>2-8,11 |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>31 May 2016 (31.05.16) | Date of mailing of the international search report<br>14 June 2016 (14.06.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

| International application No. |
| --- |
| PCT/JP2016/058202 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y<br>A | JP 2016-000421 A (Laserx Co., Ltd.),<br>07 January 2016 (07.01.2016),<br>paragraphs [0029] to [0030], [0050] to [0057];<br>fig. 6 | 1,9-10,12-14<br>2-8,11 |
| Y<br>A | JP 2005-205414 A (Matsushita Electric<br>Industrial Co., Ltd.),<br>04 August 2005 (04.08.2005),<br>paragraphs [0023] to [0034] | 9-10,12-14<br>2-8,11 |
| Y<br>A | JP 9-085480 A (Terumo Corp.),<br>31 March 1997 (31.03.1997),<br>paragraphs [0009] to [0011]; fig. 1 | 10,12-14<br>2-8,11 |
| Y | JP 2012-125772 A (Hitachi, Ltd.),<br>05 July 2012 (05.07.2012),<br>paragraphs [0015] to [0019]; fig. 1 | 14 |

Form PCT/ISA/210 (continuation of second sheet) (January 2015)

**INTERNATIONAL SEARCH REPORT**
Information on patent family members

| | International application No. |
|---|---|
| | PCT/JP2016/058202 |

| Cited Documents | Publication Date | Patent Family | Publication Date |
|---|---|---|---|
| JP 2002-172480 A | 2002.06.18 | (Family: none) | |
| JP 2002-146547 A | 2002.05.22 | (Family: none) | |
| JP 5-245675 A | 1993.09.24 | (Family: none) | |
| JP 2016-000421 A | 2016.01.07 | (Family: none) | |
| JP 2005-205414 A | 2005.08.04 | US 2005/0103753 A1 | 2005.05.19 paragraphs [0074] to [0076]; fig. 4 |
| JP 9-085480 A | 1997.03.31 | (Family: none) | |
| JP 2012-125772 A | 2012.07.05 | US 2012/0145683 A1 EP 2463052 A1 | 2012.06.14 paragraphs [0027] to [0034]; 2012.06.13 fig. 1 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130319980 A